# EUROPEAN PATENT SPECIFICATION

(11) **EP 3 784 456 B1**
(45) Date of publication and mention of the grant of the patent: **28.06.2023**
(21) Application number: 19793658.6
(22) Date of filing: 24.04.2019
(51) Int. Cl.: B27N 3/06, B27N 3/04, B32B 21/04, B32B 21/13, B32B 21/14, B32B 5/16, E04C 2/10, B27N 3/00, B27N 3/14

(54) **FIBERBOARD AND METHOD OF FORMING A FIBERBOARD**
FASERPLATTE UND VERFAHREN ZUR HERSTELLUNG EINER FASERPLATTE
PANNEAU DE FIBRES ET PROCÉDÉ DE FORMATION D'UN PANNEAU DE FIBRES

(30) Priority: 24.04.2018 SE 1850485
(43) Date of publication of application: 03.03.2021
(73) Proprietor: IKEA Supply AG, 4133 Pratteln (CH)
(72) Inventor: GERMANN, Michael, 30880 Laatzen (DE); PETTERSSON, Dan, 34143 Ljungby (SE)
(74) Representative: Ström & Gulliksson AB
(86) International application number: PCT/SE2019/050371
(87) International publication number: WO 2019/209165

(56) References cited:
- EP-A1- 3 296 073
- EP-A2- 1 088 652
- WO-A1-2018/004430
- WO-A2-2011/129755
- JP-A- 2013 188 887
- US-A1- 2010 104 813
- US-A1- 2017 057 118
- MOEZZIPOUR, BITA et al.: "Chemical changes of wood fibers after hydrothermal recycling of MDF wastes", Journal of the Indian Academy of Wood Science, vol. 14.2, 2017, pages 133-138, XP036371976, DOI: 10.1007/s13196-017-0198-6

## Description

### Field of the invention

The present invention relates to a fiberboard comprising compressed lignocellulosic fibers and a binding agent. Further, the present invention relates to a process for manufacture of a fiberboard.

### Background

Fiberboard is an engineered wood product that is made out of lignocellulosic fibers, most typically wood fibers. Wood fibers are pressed, typically with a binder (e.g. an urea-formaldehyde resin), to provide a fiberboard. Fiberboards, especially medium-density fiberboards (MDF), are used a lot in the furniture industry. Types of fiberboard in the art include medium-density fiberboard (MDF), and hardboard (HDF). For pieces of furniture that will be visible, a veneer of wood is often glued onto fiberboard to give it the appearance of conventional wood. Fiberboards are produced from fresh wood. Further, small particles are typically not used in fiberboard production, as they are known to impair the properties of the resulting fiberboard. Re-cycling of fiberboards and especially HDF to produce new fiberboards is known to be difficult.

In furniture production, there results a large amount of wooden waste material. This material comes from cutting board and wood materials into the desired shapes and sizes. The waste material typically comprises saw dust, of which a high proportion is small particles, shavings and larger pieces of wooden material. This material, which is a mixed material both with regard to particle size and type of material (it may contain different types of wood, but also some plastics, glue, etc.), is today typically combusted in a furnace/boiler, for energy recovery. Apart from its use as filler in plastics, fine particulate wooden waste material, e.g. saw dust, is not used in other furniture or construction applications.

In KR 20000002694 polyolefinic wood substitute, comprising crushed waste furniture as filler, is disclosed. A similar extruded polypropylene board comprising crushed waste timber as filler is disclosed in KR20010016955. As recognized in the art, use of wood fibers as fillers in plastic has been known for a long period of time. However, for most construction and furniture applications, a wood substitute with such a high proportion of plastic components is disadvantageous and could not be used to replace a conventional MDF or HDF board. Plastic wood substitute may not be processed in the same manner as conventional MDF and HDF boards and are difficult to re-cycle.

In US 2010/0104813, an embossed medium-density fiberboard (MDF) having a density of about 700 kg/m³ to about 900 kg/m³ and a thickness of about 12.5 mm, which can be used, for example, as a siding is disclosed. The MDF comprises a monolayer embossed MDF including wood particles having an average size of less than 4 mm. The raw material is obtained from different sawmills or wood transformation facilities. The size of the wood raw material may be anything from logs to chips, shavings or sawdust. In the embossed MDF, the particles are distributed in manner such that smaller wood particles are mainly present at the surfaces of the board, whereas larger particles are mainly present in the central portion of the board. The only raw material used in US 2010/0104813 is 100% virgin wood, i.e. the raw material used for forming the particles is wood not having been processed or re-cycled.

In WO 2018/004430A1, a hollow board with first and second main surface layers is disclosed. A plurality of distance elements connect the first and second main surface layers and maintain a predetermined distance there between. The main surface layers include at least a layer of high-density fiber, HDF, board, and a plurality of distance elements are distributed in the space between the main surface layers, and at least some comprise at least one elongate HDF board strip which is oriented such that its longitudinal edges interconnect the first and second main surface layers. The HDF boards of the surface layers and of the at least some of the distance elements comprise wood particles bonded by a resin including an isocyanate, such as methylene diphenyl di-isocyanate, MDI.

In US 2017/057118 a fiber board product comprising fibers in an amount from 50.0 to 99.0 parts by weight (d/d), at least one particulate calcium carbonate-containing material in an amount from 1.0 to 50.0 parts by weight (d/d), at least one binder in an amount from 0.05 to 25.0 parts by weight (d/d), and at least one wax in an amount from 0 to 5.0 parts by weight (d/d) is disclosed. The at least one particulate calcium carbonate-containing material is used as fiber replacement in a fiber board product, preferably in a high-density fiber (HDF) board, medium-density fiber (MDF) board, low-density fiber (LDF) board or particle board.

It would be of interest to be able to re-cycle the lignocellulosic fiber material in furniture in a more efficient way. Especially it would be of interest to provide for re-cycling of fiber boards, e.g. MDF and HDF boards. Further, it would be of interest to find a better use of all the wooden waste material resulting from furniture production, including small lignocellulosic fibers, than energy recovery.

Thus, there is need for a fiberboard material made from re-cycled furniture, as well as rest-products from the manufacture of furniture.

### Summary

Accordingly, there is, according to a first aspect of the invention, provided a fiberboard comprising lignocellulosic fibers and a binding agent. The fiberboard is provided by mixing the lignocellulosic fibers and the binding agent, arranging the mixture as a layer on surface, and pressing the layer into a 0.5 to 7 mm thick fiberboard.

It was found that the resulting properties of the fiberboard is dependent on the density of the boards. In order to provide sufficient mechanical properties (e.g. elasticity module) when employing lignocellulosic fibers from re-cycled furniture including small lignocellulosic fibers it was necessary to press the material to a density of at least 930 kg/m³. The density of the present fiberboard thus should be at least 930 kg/m³.

Further, it was found not to be necessary to discard small lignocellulosic fibers, i.e. lignocellulosic fibers passing through a metal wire cloth sieve width of 630 µm, as typically done in the art, provided that the material is pressed to a density of at least 930 kg/m³. On the contrary, it was even found to be advantageous to incorporate a relative high proportion of the small lignocellulosic fibers. Small lignocellulosic fibers should preferably be present throughout the board and not only be located at the surfaces of the fiberboard, as they were found to improve the structural integrity of the board. The small lignocellulosic fibers contributes in a positive manner to the properties of the fiberboard. Further, the use of previously discarded small lignocellulosic fibers results in avoiding having to burn a portion of lignocellulosic fibers resulting from re-cycling of furniture, thereby improving the overall process economy. In the fiberboard of the present invention, at least 50 wt% (at 6% moisture content) of the lignocellulosic fibers thus passes through a metal wire cloth sieve width of 630 µm; preferably through a metal wire cloth sieve width of 500 µm. A moisture content of 6% represents the moisture content of dried material at lab standard climate conditions (oven dried (105°C) material immediately absorbs water from the atmosphere when taken out from the oven, so a 0% moisture content is in practical testing not practically possible). At any given location in the fiberboard the content of lignocellulosic fibers passing through a metal wire cloth sieve width of 630 µm, preferably through a metal wire cloth sieve width of 500 µm, should preferably be at least 25 wt%, more preferably at least 40 wt%.

Furthermore, the content of large lignocellulosic fibers should be low in order to provide the desired properties and to enable efficient production of the fiberboard. In the fiberboard of the present invention, at least 95 wt% (at 6% moisture content) of the lignocellulosic fibers therefore passes through a metal wire cloth sieve width of 3 mm; preferably through a metal wire cloth sieve width of 2 mm. However, at least 15 wt% (at 6% moisture content) of the lignocellulosic fibers does not pass through a metal wire cloth sieve width of 315 µm.

Whereas a content of lignocellulosic fibers in the fiberboard of at least 50 wt% (at 6% moisture content) is acceptable, the content of lignocellulosic fibers in the fiberboard is typically higher. According to an embodiment, the content of lignocellulosic fibers in the fiberboard is at least 70, 80, 85, or 90 wt% (at 6% moisture content).

According to an embodiment, the metal wire cloth sieve and the sieve width is in accordance with ISO 3310-1:2016 "*Test sieves* - *Technical requirements and testing - Part 1: Test sieves of metal wire cloth".* Further, sieving with such a sieve may be performed in accordance with ISO 2591-1:1988 "*Test sieving - Part 1: Methods using test sieves of woven wire cloth and perforated metal plate*"*.* Further guidance is provided in ISO 2395 "*Test sieves and test sieving - Vocabulary*" and ISO 565:1990 "*Test sieves - Metal wire cloth, perforated metal plate and electroformed sheet-Nominal sizes of openings".* These further standards are referred to in the first-mentioned ISO 3310-1:2016.

As recognized by the skilled person, the expression that at least X wt% of a sample of lignocellulosic fibers passes through a metal wire cloth sieve width of Y mm, implies that 100%-X wt% of the sample is too large to pass through the given sieve width, i.e. Y mm. As an example, if 95 wt% of a given sample passes through a metal wire cloth sieve width of 3 mm, then 5 wt% does not pass there through.

Preferably, not all lignocellulosic fibers in the fiberboard is small fibers. The lignocellulosic fibers in the fiberboard may thus fulfill one or several of the following criteria:
- at least 20, 25, 30, or 35 wt% (at 6% moisture content) of the lignocellulosic fibers does not pass through a metal wire cloth sieve width of 125 µm; and/or
- at least 20, 25, or 30 wt% (at 6% moisture content) of the lignocellulosic fibers does not pass through a metal wire cloth sieve width of 315 µm; and/or
- at least 5, 10, 15, or 20 wt% (at 6% moisture content) of the lignocellulosic fibers does not pass through a metal wire cloth sieve width of 630 µm.

Further, it is preferred that some of the lignocellulosic fibers in the fiberboard are small fibers or even very small fibers. The lignocellulosic fibers in the fiberboard may thus fulfill one or both of the following criteria:
- at least 5, 10, 15, or 20 wt% (at 6% moisture content) of the lignocellulosic fibers passes through a metal wire cloth sieve width of 125 µm; and/or
- at least 10, 15, 20, 25, or 30 wt% (at 6% moisture content) of the lignocellulosic fibers passes through a metal wire cloth sieve width of 315 µm.

While a small portion of the lignocellulosic fibers in the fiberboard may be very large fiber, it is preferred if this portion is limited. According to an embodiment, at least 97.5 wt% (at 6% moisture content), such as at least 99.0 wt% (at 6% moisture content), of the lignocellulosic fibers passes through a metal wire cloth sieve width of 3 mm, more preferably through a metal wire cloth sieve width of 2 mm.

In the current disclosure the phrase "re-cycled lignocellulosic fibers" includes lignocellulosic fibers originating from used products, such as used pieces of furniture, but the phrase "re-cycled lignocellulosic fibers" also refers to lignocellulosic fibers being residues from manufacturing processes, such residues including for example saw dust, cut off end pieces, etc.).

As already described, one objective of the present invention is to allow use of re-cycled lignocellulosic fibers originating from furniture. Thus, the fiberboard according to an embodiment comprises re-cycled lignocellulosic fibers from furniture. Re-cycled lignocellulosic fibers may be lignocellulosic fibers originating from disintegrated MDF (medium density fiber)- and/or HDF (high density fiber)-boards, particle boards, wood based panels, such as oriented strand board (OSB) and plywood, or solid wood residues, such as parts of solid wood objects (e.g. cut off end pieces) or saw dust. Typically, re-cycled lignocellulosic fibers originates from more than one source. Disintegration of the objects comprising lignocellulosic fibers may be performed by various methods or combinations thereof. Suitable disintegration methods includes crushing, grinding, milling, and refining. Typically, sequences of such methods may be used to reduce the particle size stepwise, e.g. crushing followed by grinding and/or milling. Preferably the fiberboard comprises at least 25 wt%, more preferably at least 50 wt%, (at 6% moisture content) re-cycled lignocellulosic fibers. Such re-cycled lignocellulosic fibers may originate from disintegrated MDF- and/or HDF-boards, particle boards, wood based panels, such as oriented strand board (OSB) and plywood, and solid wood residues. Preferably, the re-cycled lignocellulosic fibers originate from wood related industry, such as forest industry, board industry and furniture industry, and/or post-consumer waste, such as used furniture. It has been found that present invention is well suited for incorporating lignocellulosic fibers originate various kinds of boards and panels. As recognized in the art, boards and panels are demanding to re-cycle. This especially applies to MDF- and/or HDF-boards. According to an embodiment, the fiberboard comprises at least 25 wt% re-cycled lignocellulosic fibers originating from disintegrated MDF- and/or HDF-boards, particle boards, wood based panels, such as oriented strand board (OSB) and plywood, such as at least 25 wt% re-cycled lignocellulosic fibers originating from disintegrated MDF- and/or HDF-boards.

The present fiberboard typically is 7 mm thick or thinner. Thus, the fiberboard may be 0.5 to 7 mm thick. Preferably, the fiberboard is 1 to 6 mm thick and even more preferably 2 to 4 mm thick.

Apart from the lignocellulosic fibers, the fiberboard also comprises a binding agent. The binding agent is typically separately added to the fibers. Examples of binding agents include MUF (melamine urea formaldehyde), MDI (methylene diphenyl isocyanate), and lignin (in addition to lignin comprised by the fibers). The binding agent is added to allow for binding the fibers together in pressing the fibers and the binding agent to provide the board.

According to an embodiment, the binding agent is an isocyanate. The isocyanate may be methylene diphenyl di-isocyanate (MDI), e.g. 4, 4'-methylene diphenyl di-isocyanate, or a polymethylene polyphenylene isocyanate, e.g. a polymethylene polyphenylene isocyanate comprising a residue of 4, 4'-methylene diphenyl di-isocyanate. According to such an embodiment, the amount of binding agent in the fiberboard may be 1 to 10 wt% based on final fiberboard weight. Preferably, the amount of binding agent is 2 to 9 wt% based on final fiberboard weight, and more preferably 2.5 to 8 wt% based on final fiberboard weight.

According to an alternative, but less preferred embodiment, the binding agent is a urea-formaldehyde resin, or a melamine reinforced urea resin. According to such an embodiment, the amount of binding agent in the fiberboard may be 5 to 20 wt% based on final fiberboard weight. Preferably, the amount of binding agent in the fiberboard is 6 to 16 wt%, based on final fiberboard weight.

As recognized by the skilled person, lignocellulosic fibers are derived from plant dry matter, e.g. wood. The fibers are composed of cellulose and hemicellulose tightly bound to lignin, a cross-linked phenolic polymer.

The fiberboard may be a board comprising a single layer. According to some embodiments, it may be preferred though to provide the fiberboard with more than one layer. As an example, it may be advantageous to provide the fiberboard with a surface layer arranged in the fiberboard in addition to a further layer, which could be called a core layer. Such a surface layer may provide improved attachment of coating layer, e.g. paint or a wood veneer, added subsequently to the fiberboard. Further, the surface layer may comprise a high proportion of small fibers, thus providing a visually more even impression of the surface.

According to an embodiment, the lignocellulosic fibers, of which at least 95 wt% (at 6% moisture content) passes through a metal wire cloth sieve width of 3 mm and at least 50 wt% (at 6% moisture content) passes through a metal wire cloth sieve width of 630 µm, and the binding agent are present in at least two connected layers, i.e. a first and a second layer. Typically, the layers are connected to each other in pressing the lignocellulosic fibers and the binding agent in each layer together. According to such an embodiment, 10 wt% to 50 wt% (at 6% moisture content) of the lignocellulosic fibers in a first layer does not pass through a metal wire cloth sieve width of 630 µm. Thus, the first layer comprises a portion of fibers of intermediate size, i.e. fibers passing through a metal wire cloth sieve width of 3 mm, but not through a metal wire cloth sieve width 630 µm. However, the first layer comprises also small fibers. These small fibers are present throughout the first layer in order to improve the structural integrity of the first layer. At least 50 wt% (at 6% moisture content) of the lignocellulosic fibers in the first layer passes through a metal wire cloth sieve width of 630 µm. Preferably, at least 25 wt% (at 6% moisture content) of the lignocellulosic fibers in the first layer passes through a metal wire cloth sieve width of 315 µm. It also preferred that at least 10 wt% (at 6% moisture content) of the lignocellulosic fibers in the first layer passes through a metal wire cloth sieve width of 125 µm. In contrast thereto, the second layer comprises a high proportion of small fibers. More than 90 wt%, 95 wt%, or even more than 99% (at 6% moisture content) of the lignocellulosic fibers in the second layer passes through a metal wire cloth sieve width of 630 µm. Further, at least 40 wt% (at 6% moisture content) of the lignocellulosic fibers in the second layer passes through a metal wire cloth sieve width of 315 µm. Typically, at least 20 wt% (at 6% moisture content) of the lignocellulosic fibers in the second layer even passes through a metal wire cloth sieve width of 125 µm. As already outlined, the proportion of small fibers is larger in the second layer than in the first layer. Thus, the average particle size in the second layer is smaller than the average particle size in the first layer.

The second layer is typically thinner than the first layer, which may be denoted the main layer or the core layer. The second layer may have the same weight as the first layer, though the weight of the second layer typically is less than the weight of the first layer. Preferably, the weight of the second layer is less than 50% of the weight of the first layer. The weight of the second layer may even be less than 30% of the weight of the first layer. Preferably, the first layer is a core layer constituting 30 to 90%, more preferably 40 to 90 %, most preferred 60 to 85% of the total weight of the board

According to an embodiment, the lignocellulosic fibers, of which at least 95 wt% (at 6% moisture content) passes through a metal wire cloth sieve width of 3 mm and at least 50 wt% (at 6% moisture content) passes through a metal wire cloth sieve width of 630 µm, and the binding agent are present in at least three connected layers, i.e. a first, a second, and a third layer. Typically, the layers are connected in pressing the lignocellulosic fibers and the binding agent in each layer together. Though not necessary, the second and the third layer typically are arranged at opposite sides of the first layers to provide a surface layer at side of the fiberboard. The first layer will then become a core layer. According to an embodiment according to which the fiberboard comprises at least three connected layers, 10 wt% to 50 wt% (at 6% moisture content) of the lignocellulosic fibers in a first layer does not passes through a metal wire cloth sieve width of 630 µm. Thus, the first layer comprises a portion of fibers of intermediate size, i.e. fibers passing through a metal wire cloth sieve width of 3 mm, but not through a metal wire cloth sieve width 630 µm. However, the first layer comprises also small fibers. At least 50 wt% (at 6% moisture content) of the lignocellulosic fibers in the first layer passes through a metal wire cloth sieve width of 630 µm. Preferably, at least 25 wt% (at 6% moisture content) of the lignocellulosic fibers in the first layer passes through a metal wire cloth sieve width of 315 µm. It is also preferred that at least 10 wt% (at 6% moisture content) of the lignocellulosic fibers in the first layer passes through a metal wire cloth sieve width of 125 µm.

In contrast, the second layer comprises a high proportion of small fibers. More than 90 wt%, 95 wt%, or even more than 99% (at 6% moisture content) of the lignocellulosic fibers in the second layer passes through a metal wire cloth sieve width of 630 µm. Further, at least 40 wt% (at 6% moisture content) of the lignocellulosic fibers in the second layer passes through a metal wire cloth sieve width of 315 µm. Typically, at least 20 wt% (at 6% moisture content) of the lignocellulosic fibers in the second layer even passes through a metal wire cloth sieve width of 125 µm. As already outlined, the proportion of small fibers is larger in the second layer than in the first layer.

The third layer also comprises a high proportion of small fibers. More than 90 wt%, 95 wt%, or even more than 99% (at 6% moisture content) of the lignocellulosic fibers in the third layer passes through a metal wire cloth sieve width of 630 µm. Further, at least 40 wt% (at 6% moisture content) of the lignocellulosic fibers in the third layer passes through a metal wire cloth sieve width of 315 µm. Typically, at least 20 wt% (at 6% moisture content) of the lignocellulosic fibers in the third layer even passes through a metal wire cloth sieve width of 125 µm. As already outlined, the proportion of small fibers is larger in the third layer than in the first layer.

Though not necessary, the particle size distribution of lignocellulosic fiber is typically the same in the second and the third layer. Further, the average particle size in the second layer, and in the third layer, respectively, is smaller than in the first layer.

The second layer and the third layer is typically thinner than the first layer, which may be denoted the main layer (or core layer if the second and third layers are arranged at opposite sides of the first layer). The second layer and the third layer may have the same weight as the first layer, though the weight of each of the second layer and the third layer typically is less that the weight of the first layer. Preferably, the weight of each of the second layer and the third layer is less than 50% of the weight of the first layer. The weight of each of the second layer and the third layer may even be less than 30% of the weight of the first layer. Preferably, the first layer is a core layer constituting 30 to 90%, more preferably 40 to 90 %, most preferred 60 to 85% of the total weight of the board

According to a second aspect of the invention, there is provided a process for providing a fiberboard comprising lignocellulosic fibers and a binding agent pressed together. The fiberboard is typically the kind of fiberboard described herein above. Thus, features of the fiberboard already described in relation to the fiberboard are equally applicable in relation to the process for providing a fiberboard comprising lignocellulosic fibers and a binding agent pressed together.

The process for providing a fiberboard comprising lignocellulosic fibers and a binding agent pressed together comprises the steps of:
- mixing lignocellulosic fibers and a binding agent;
- arranging the mix of the lignocellulosic fibers and the binding agent as at least a first layer (as outlined below, further layer(s) comprising lignocellulosic fibers and a binding agent may be present) on a surface; and
- pressing the first layer of mixed lignocellulosic fibers and binding agent to a fiberboard.

In the process, at least 95 wt% (at 6% moisture content) of the lignocellulosic fibers are lignocellulosic fibers passing through a metal wire cloth sieve width of 3 mm. Further, at least 50 wt% of the lignocellulosic fibers are lignocellulosic fibers passing through a metal wire cloth sieve width of 630 µm. Furthermore, at least 15 wt% (at 6% moisture content) of the lignocellulosic fibers does not pass through a metal wire cloth sieve width of 315 µm. As already outlined, small lignocellulosic fibers (e.g. lignocellulosic fibers passing through a metal wire cloth sieve width of 630 µm) are present throughout the board and are not only located at the surfaces of the fiberboard. At any given location in the fiberboard the content of lignocellulosic fibers passing through a metal wire cloth sieve width of 630 µm, preferably through a metal wire cloth sieve width of 500 µm, is preferably at least 25 wt%, more preferably 25 wt%. Especially, at any given location in the first layer, the content of lignocellulosic fibers passing through a metal wire cloth sieve width of 630 µm, preferably through a metal wire cloth sieve width of 500 µm, is preferably at least 25 wt%, more preferably 25 wt%. Furthermore, the layer(s) of mixed lignocellulosic fibers and binding agent are pressed in a manner such that the resulting fiberboard is in total 0.5 to 7 mm thick and has a density of at least 930 kg/m³. The density of the resulting fiberboard may be affected by controlling the pressure in the pressing step. For a press with a defined distance between the two surfaces pressed together, the pressure is dependent on the amount of material to be pressed - the more material, the higher the density in the resulting fiberboard. The fiberboard, typically being 0.5 to 7 mm thick, may be 1 to 6 mm thick, such as 2 to 4 mm thick.

As the fibers used to provide the fiberboard typically are re-cycled lignocellulosic fibers, their moisture content is typically higher than the moisture content of new lignocellulosic fiber used in producing HDF. The moisture content of the lignocellulosic fibers to be arranged and pressed into a fiberboard may thus be at least 12%. The moisture content is preferably in the range 14 to 18%.

The surface on which the lignocellulosic fibers and the binding agent is arranged as a layer may be an endless moving belt. The belt may be a closed smooth belt or a wire mesh belt. The endless moving belt may be used to feed the layer of lignocellulosic fibers and binding agent to a press.

Typically, the press is a continuous or discontinuous wood based panel press. Such presses are available from e.g. Dieffenbacher GmbH, Eppingen, DE, and G. Siempelkamp GmbH & Co. KG, Krefeld, DE. The layer of lignocellulosic fibers and binding agent may be pressed at 100 to 250°C, such as 125 to 180°C in the heating platen. The applied pressure may be 0.5 to 10 N/mm², such as 1 to 6 N/mm².

Whereas a content of lignocellulosic fibers in the mix of the lignocellulosic fibers and the binding agent of at least 50 wt% (at 6% moisture content) is acceptable, the content of lignocellulosic fibers in the mix of the lignocellulosic fibers and the binding agent typically is higher. According to an embodiment, the content of lignocellulosic fibers in the mix of the lignocellulosic fibers and the binding agent is at least 70, 80, 85, or 90 wt% (at 6% moisture content). This provides for an even higher strength of the fiberboard.

Preferably, not all lignocellulosic fibers in the mix of the lignocellulosic fibers and the binding agent are small fibers. The lignocellulosic fibers in the mix of the lignocellulosic fibers and the binding agent may thus fulfill one or several of the following criteria:
- at least 20, 25, 30, or 35 wt% (at 6% moisture content) of the lignocellulosic fibers does not pass through a metal wire cloth sieve width of 125 µm; and/or
- at least 20, 25, or 30 wt% (at 6% moisture content) of the lignocellulosic fibers does not pass through a metal wire cloth sieve width of 315 µm; and/or
- at least 5, 10, 15, or 20 wt% (at 6% moisture content) of the lignocellulosic fibers does not pass through a metal wire cloth sieve width of 630 µm.

Further, it is preferred that some of the lignocellulosic fibers in the mix of the lignocellulosic fibers and the binding agent are small fibers or even very small fibers. The lignocellulosic fibers in the mix of the lignocellulosic fibers and the binding agent may thus fulfill one or both of the following criteria:
- at least 5, 10, 15, or 20 wt% (at 6% moisture content) of the lignocellulosic fibers passes through a metal wire cloth sieve width of 125 µm; and/or
- at least 10, 15, 20, 25, or 30 wt% (at 6% moisture content) of the lignocellulosic fibers passes through a metal wire cloth sieve width of 315 µm.

While a small portion of the lignocellulosic fibers in the mix of the lignocellulosic fibers and the binding agent may be very large fibers it is preferred if this portion is limited. According to an embodiment, at least 97.5 wt% (at 6% moisture content), such as at least 99.0 wt% (at 6% moisture content), of the lignocellulosic fibers passes through a metal wire cloth sieve width of 3 mm, more preferably passes through a metal wire cloth sieve width of 2 mm.

As already described, one objective of the present invention is to allow use of re-cycled lignocellulosic fibers originating from furniture. Thus, the mix of the lignocellulosic fibers and the binding agent according to an embodiment comprises re-cycled lignocellulosic fibers. Re-cycled lignocellulosic fibers may be lignocellulosic fibers originating from disintegrated MDF (medium density fiber)- and/or HDF (high density fiber)-boards, particle boards, wood based panels, such as oriented strand board (OSB) and plywood, or solid wood residues, such as parts of solid wood objects or saw dust. Typically, re-cycled lignocellulosic fibers originate from more than one source. Disintegration of the objects comprising lignocellulosic fibers may be performed by various methods or combinations thereof. Suitable disintegration methods includes crushing, grinding, milling, and refining. Typically, sequences of methods may be used to reduce the particle size stepwise, e.g. crushing followed by grinding and/or milling. Preferably the mix of the lignocellulosic fibers and the binding agent comprises at least 25 wt%, more preferably at least 50wt%, (at 6% moisture content) re-cycled lignocellulosic fibers. Such fibers may originate from disintegrated MDF- and/or HDF-boards, particle boards, wood based panels, such as oriented strand board (OSB) and plywood, and solid wood residues. Preferably, the re-cycled lignocellulosic fibers originate from wood related industry, such as forest industry, board industry and furniture industry, and/or post-consumer waste, such as used furniture. It has been found that the present process is well suited for incorporating lignocellulosic fibers originating from various kinds of boards and panels. As recognized in the art, boards and panels are demanding to re-cycle. This especially applies to MDF- and/or HDF-boards. According to an embodiment, the mix of the lignocellulosic fibers and the binding agent comprises at least 25 wt% re-cycled lignocellulosic fibers originating from disintegrated MDF- and/or HDF-boards, particle boards, wood based panels, such as oriented strand board (OSB) and plywood, such as at least 25 wt% re-cycled lignocellulosic fibers originating from disintegrated MDF- and/or HDF-boards.

The resulting fiberboard typically is in total 7 mm thick or thinner. The resulting fiberboard may be 0.5 to 7 mm thick. Preferably, the resulting fiberboard is 1 to 6 mm thick and even more preferably 2 to 4 mm thick. Fiberboards of these thicknesses can be prepared with a high mechanical strength. Furthermore, fiberboards having such combination of mechanical strength and thickness find many uses in, for example, furniture industry, for example for manufacturing cabinets, drawers, book shelves etc.

Apart from the lignocellulosic fibers, the fiberboard also comprises a binding agent. The binding agent is typically separately added to the fibers. Examples of binding agents include MUF (melamine urea formaldehyde), MDI (methylene diphenyl isocyanate), and lignin (in addition to lignin comprised by the fibers). The binding agent is added to allow for binding the fibers together in pressing the fibers and the binding agent to provide the board.

According to an embodiment, the binding agent is an isocyanate. The isocyanate may be methylene diphenyl di-isocyanate (MDI), e.g. 4, 4'-methylene diphenyl di-isocyanate, or a polymethylene polyphenylene isocyanate, e.g. a polymethylene polyphenylene isocyanate comprising a residue of 4, 4'-methylene diphenyl di-isocyanate. According to such an embodiment, the amount of binding agent in the mix of the lignocellulosic fibers and the binding agent may be 1 to 10 wt% . Preferably, the amount of binding agent is 2 to 9 wt%; and more preferably 2.5 to 8 wt%.

According to an alternative, but less preferred embodiment, the binding agent is a urea-formaldehyde resin, or a melamine reinforced urea resin. According to such an embodiment, the amount of binding agent in the mix of the lignocellulosic fibers and the binding agent may be 5 to 20 wt%. Preferably, the amount of binding agent in the mix of the lignocellulosic fibers and the binding agent is 6 to 16 wt%,.

As already outlined, the lignocellulosic fibers comprises fibers of various size. In order to control the size distribution of the lignocellulosic fibers, the process may comprise a further the step of size-related sorting, such as classifying, screening, sieving, or sifting, the lignocellulosic fibers before being mixed with the binding agent. Preferably the lignocellulosic fibers have been exposed to a step of disintegration prior to the step of size-related sorting of the fibers. Disintegration has already been described herein above.

Further, the size distribution of the lignocellulosic fibers may be controlled by mixing two or more portions of lignocellulosic fibers having different size distribution. According to an embodiment the lignocellulosic fibers to be mixed with the binding agent is provided by mixing a first portion of lignocellulosic fibers with a second portion of lignocellulosic fibers. In order to control the size distribution of the lignocellulosic fibers to be mixed with the binding agent, the size distribution of lignocellulosic fibers in the first portion differs from the size distribution of lignocellulosic fibers in the second portion. Preferably the first and/or the second portion of lignocellulosic fibers has been obtained by size-related sorting of the lignocellulosic fibers to control the size distribution of the lignocellulosic fibers in the respective portion.

As already outlined, the resulting fiberboard may be a board comprising a single layer. According to some embodiments, it may be preferred though to provide the fiberboard with more than one layer. As an example, it may be advantageous to provide the fiberboard with a surface layer. Such a surface layer may provide improved attachment of coating layer, e.g. paint or a wood veneer, added subsequently to the fiberboard. Further, the surface layer may comprise a high proportion of small fibers thus providing a visual more even impression of the surface.

According to an embodiment, the process for providing the fiberboard comprises a further step of forming a second layer of lignocellulosic fibers and a binding agent adjacent to the first layer of mixed lignocellulosic fibers and a binding agent prior to pressing the first layer. Upon pressing the two layers of lignocellulosic fibers and binding agent, a layered fiberboard is provided. According to such an embodiment:
- at least 95 wt% (at 6% moisture content) of the lignocellulosic fibers in the first layer passes through a metal wire cloth sieve width of 3 mm, 10 wt% to 50 wt% (at 6% moisture content) of the lignocellulosic fibers in the first layer does not pass through a metal wire cloth sieve width of 630 µm, and at least 50 wt% (at 6% moisture content) of the lignocellulosic fibers in the first layer passes through a metal wire cloth sieve width of 630 µm; and
- at least 95 wt% (at 6% moisture content) of the lignocellulosic fibers in the second layer passes through a metal wire cloth sieve width of 3 mm, more than 90 wt% (at 6% moisture content) of the lignocellulosic fibers in the second layer passes through a mesh sieve width of 630 µm, and at least 40 wt% (at 6% moisture content) of the lignocellulosic fibers (in free from) in the second layer passes through a metal wire cloth sieve width of 315 µm. The average particle size in the second layer is smaller than in the first layer. As already outlined, small lignocellulosic fibers (e.g. lignocellulosic fibers passing through a metal wire cloth sieve width of 630 µm) are present throughout the first layer. At any given location in the first layer, the content of lignocellulosic fibers passing through a metal wire cloth sieve width of 630 µm, preferably through a metal wire cloth sieve width of 500 µm, is preferably at least 25 wt%, more preferably 25 wt%. Further, the layered fiberboard is in total 0.5 to 7 mm thick.

According to such an embodiment, it is preferred that at least 25 wt% (at 6% moisture content) of the lignocellulosic fibers in the first layer passes through a metal wire cloth sieve width of 315 µm. It also preferred that at least 10 wt% (at 6% moisture content) of the lignocellulosic fibers in the first layer passes through a metal wire cloth sieve width of 125 µm. Further, typically at least 20 wt% (at 6% moisture content) of the lignocellulosic fibers in the second layer even passes through a metal wire cloth sieve width of 125 µm.

The second layer preferably comprises a high proportion of small fibers. Thus, more than 90 wt%, 95 wt%, or even more than 99 wt% (at 6% moisture content) of the lignocellulosic fibers in the second layer passes through a metal wire cloth sieve width of 630 µm. Further, at least 40 wt% (at 6% moisture content) of the lignocellulosic fibers in the second layer passes through a metal wire cloth sieve width of 315 µm. Typically, at least 20 wt% (at 6% moisture content) of the lignocellulosic fibers in the second layer even passes through a metal wire cloth sieve width of 125 µm. As already outlined, the proportion of small fibers is higher in the second layer than in the first layer.

According to a variant of this embodiment for providing a layered fiberboard, the process comprises the further the steps of forming a second layer of lignocellulosic fibers and a binding agent on a first side of the first layer, and forming a third layer of lignocellulosic fibers and a binding agent on a second side of the first layer. The further steps of forming the second and third layer, respectively, are performed before the pressing. Upon pressing the three layers of lignocellulosic fibers and binding agent, a layered fiberboard comprising at least three layers is provided. According to such an embodiment:
- at least 95 wt% (at 6% moisture content) of the lignocellulosic fibers in the first layer passes through a metal wire cloth sieve width of 3 mm, 10 wt% to 50 wt% (at 6% moisture content) of the lignocellulosic fibers in the first layer does not pass through a metal wire cloth sieve width of 630 µm, and at least 50 wt% (at 6% moisture content) of the lignocellulosic fibers in the first layer passes through a metal wire cloth sieve width of 630 µm;
- at least 95 wt% (at 6% moisture content) of the lignocellulosic fibers in the second layer passes through a metal wire cloth sieve width of 3 mm, more than 90 wt% of the lignocellulosic fibers in a second layer passes through a mesh sieve width of 630 µm, and at least 40 wt% of the lignocellulosic fibers (in free from) in the second layer passes through a metal wire cloth sieve width of 315 µm; and
- at least 95 wt% (at 6% moisture content) of the lignocellulosic fibers in the third layer passes through a metal wire cloth sieve width of 3 mm, more than 90 wt% of the lignocellulosic fibers (in free form) in a third layer passes through a mesh sieve width of 630 µm, and at least 40 wt% of the lignocellulosic fibers (in free from) in the third layer passes through a metal wire cloth sieve width of 315 µm. The average particle size in the second layer and in the third layer is smaller than in the first layer. As already outlined, small lignocellulosic fibers (e.g. lignocellulosic fibers passing through a metal wire cloth sieve width of 630 µm) are present throughout the first layer. At any given location in the first layer, the content of lignocellulosic fibers passing through a metal wire cloth sieve width of 630 µm, preferably through a metal wire cloth sieve width of 500 µm, is preferably at least 25 wt%, more preferably 25 wt%. Further, the layered fiberboard is in total 0.5 to 7 mm thick.

According to such an embodiment, it is preferred that at least 25 wt% (at 6% moisture content) of the lignocellulosic fibers in the first layer passes through a metal wire cloth sieve width of 315 µm. It also preferred that at least 10 wt% (at 6% moisture content) of the lignocellulosic fibers in the first layer passes through a metal wire cloth sieve width of 125 µm. Further, typically at least 20 wt% (at 6% moisture content) of the lignocellulosic fibers in the second layer as well in the third layer even passes through a metal wire cloth sieve width of 125 µm.

The second layer preferably comprises a high proportion of small fibers. Thus, more than 90 wt%, 95 wt%, or even more than 99 wt% (at 6% moisture content) of the lignocellulosic fibers in the second layer passes through a metal wire cloth sieve width of 630 µm. Further, at least 40 wt% (at 6% moisture content) of the lignocellulosic fibers in the second layer passes through a metal wire cloth sieve width of 315 µm. Typically, at least 20 wt% (at 6% moisture content) of the lignocellulosic fibers in the second layer even passes through a metal wire cloth sieve width of 125 µm. As already outlined, the proportion of small fibers is higher in the second layer than in the first layer.

Further, also the third layer preferably comprises a high proportion of small fibers. Thus, more than 90 wt%, 95 wt%, or even more than 99 wt% (at 6% moisture content) of the lignocellulosic fibers in the third layer passes through a metal wire cloth sieve width of 630 µm. Further, at least 40 wt% (at 6% moisture content) of the lignocellulosic fibers in the third layer passes through a metal wire cloth sieve width of 315 µm. Typically, at least 20 wt% (at 6% moisture content) of the lignocellulosic fibers in the third layer even passes through a metal wire cloth sieve width of 125 µm.

The appearance or structure of surface of the fiberboard may be affected by spraying water onto the top surface of the layer(s) of mixed lignocellulosic fibers and binding agent before being pressed into a fiberboard. According to an embodiment, the process thus further comprises the step of spraying water onto the top surface of the layer(s) of mixed lignocellulosic fibers and binding agent before being pressed into a fiberboard.

### Brief description of the drawings

These and other aspects, features and advantages of which the invention is capable of will be apparent and elucidated from the following description of embodiments of the present invention, reference being made to the accompanying drawings, in which:
In **Fig. 1** a process scheme for producing a layered fiberboard, comprising compressed lignocellulosic fibers, according to one embodiment is provided.
**Fig. 2** depicts a three-layered fiberboard having a core layer and two surface layers. The production direction (cf. Fig. 1) is indicated in the figure.

### Detailed description

The following description focuses on an embodiment of the present invention applicable to a process for providing a fiberboard comprising lignocellulosic fibers from re-cycled furniture, HDF etc. However, it will be appreciated that the invention is not limited to the specific exemplary embodiment described.

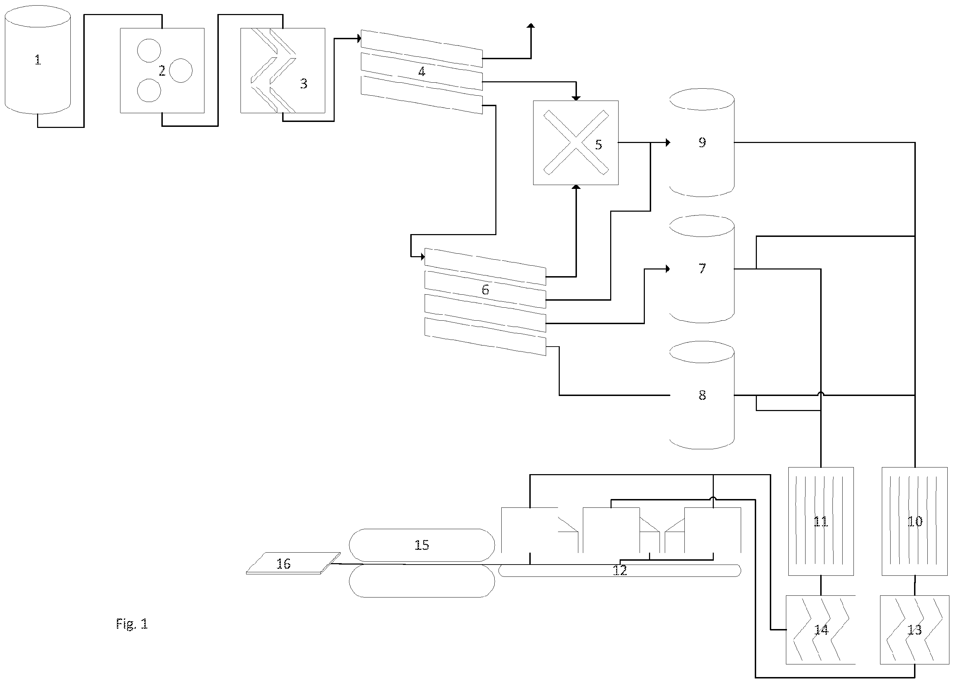

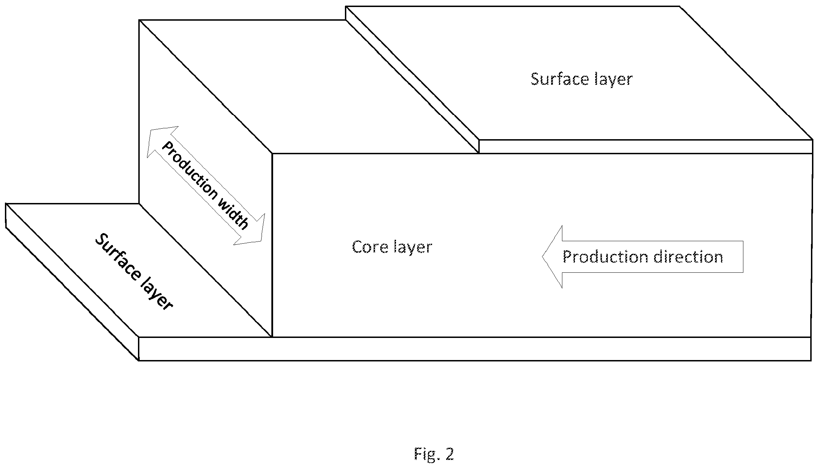

In the process scheme outlined in Fig. 1, lignocellulosic fibers provided by crushing and disintegrating waste furniture, MDF-boards etc., are stored in a first silo 1. From the first silo 1, the lignocellulosic fibers are fed, via a ferrous metal remover 2 and a non-ferrous metal remover 3, to a first screen 4. The ferrous metal remover 2 removes objects comprising ferrous metal, e.g. steel, being magnetic, and the non-ferrous metal remover 3 removes objects comprising non-ferrous metal, e.g. aluminum, copper, bras, and tin. In the first screen 4, large (> 25 mm) particles are discarded, which for example could mean returning the large particles to a crushing and disintegration step preceding the first silo 1, whereas medium sized (2 to 25 mm) particles are fed to a mill 5, and small (< 2 mm) particles are fed to a second screen 6. From the second screen 6, large (> 2 mm) particles are fed to the mill 5, large to medium sized (0.7 to 2 mm) particles are fed to a second silo 9, small to medium sized (0.3 to 0.7 mm) particles are fed to a second silo 7, and small (< 0.3 mm) particles are fed to a third silo 8. Milled particles from the mill 5 are fed to the fourth silo 9. Particles from the second silo 7, the third silo 8, and the fourth silo 9 are fed to a first blender 10. In the first blender 10, particles from the second silo 7, the third silo 8, and the fourth silo 9 are mixed with a binding agent. Similarly, particles from the second silo 7 and the third silo 8 are fed to a second blender 11 to be mixed with a binding agent. Before particles from the first blender 10 are fed to a continuous forming belt 12, large particles (e.g. lumps of binding agent) are removed in a first sifter 13. Further, before particles from the second blender 11 are fed to the continuous forming belt 12, large particles are removed in a second sifter 14. By subsequently feeding particles from the second sifter 14, particles from the first sifter 13, and particles from second sifter 14 to the continuous forming belt 12, a three-layered fiber mat to be fed to a press 15, is arranged on the continuous forming belt 12. In the three-layered fiber mat, particles from the first sifter 13 are arranged as a first layer in the form of a core layer, whereas particles from the second sifter 14 are arranged as second and third layers in the form of upper and lower surface layers. By pressing the three-layered fiber mat in the press 15, a fiberboard 16 (cf. Fig. 2) comprising lignocellulosic fibers and a binding agent is provided.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

The embodiment of Figure 1 describes a production method and equipment of producing a fiberboard having a core layer and two surface layers arranged on opposite sides thereof. It will be appreciated that it would be equally possible to modify the production method and equipment for producing a fiberboard having a core layer and a surface layer on one side thereof, for example by shutting off one of the two forming stations arranged for forming mixture of particles and binding agent into a surface layer.

Still further, it would also be possible to modify the production method and equipment for producing a fiberboard having only one layer, for example by shutting off the two forming stations arranged for forming mixture of particles and binding agent into surface layers.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### Examples

The following examples are mere examples and should by no means be interpreted to limit the scope of the invention, as the invention is limited only by the accompanying claims.

As outlined below a number of fiberboards were obtained by mixing a lignocellulosic fiber blend with a binding agent. The resulting fiber mix was pressed into a fiberboard and the resulting fiberboards were evaluated.

### Example 1 - single layer fiberboards

In example 1, a number of thin boards with a single fiber layer were produced and tested.

### Fibers

Lignocellulosic fibers were provided by crushing and disintegrating waste furniture, HDF-boards, etc. to size of less than 25 mm. The resulting fibers were milled down by a hammer mill. All parts which are smaller than 1.2 and 2 mm, respectively, may leave the milling chamber through 2 types of steel plates with defined openings. The retention time and the size of the openings define the material mix (by modifying the number of 1.2 mm holes relative to the number of 2 mm holes the particle size distribution can be modified). In the present examples, around half of the total open area was with 1.2 mm holes and half of the open area was with 2 mm holes.

### Binding agent

The binding agent was sprayed to atomize the adhesive into very small drops. These drops were caught by an airstream and mixed with the milled fibers in this air stream to provide a fiber blend to be pressed into a fiberboard. The glue type used was Huntsman I-Bond MDF EM 4330, available from Huntsman Holland BV, Botlek-Rotterdam, NL.

### Pressing

The fiber blend was formed into a mat by distributing it onto a vacuum belt (also a closed belt may be used). The formed mat was transferred into the inlet of a press and pre-compressed to reduce the air volume in the mat. In the following step, the mat was heated, followed by a compression step to achieve the final thickness. In the last step, the mat is held under pressure to allow for curing. The press was a discontinuous lab press, applying a pressure of up to 5 N/mm².

### Fiber blends

The size distribution of fibers in the boards before being pressed were determined in accordance with ISO 3310-1:2016 (Teil 1: Analysensiebe mit Metalldrahtgewebe). All of the boards comprised a high proportion of small fibers (Particle size < 0.65 mm). Further, also the proportion of really small fibers (particle size < 0.3 mm) was fairly high. In example 1, two types of fiber blends were used. The size distribution of these fiber blends in accordance with ISO 3310-1:2016 are provided below in Table 1a and 1b. The second blend, Blend 2, only comprised small particles. This fiber blend was used as surface layer (SL) in subsequent examples (cf. example 2), whereas the first fiber blend, Blend 1, comprising also larger fibers (particle size > 0.65 mm), was used as core layer (CL).

**Table 1a**

| **Blend 1** | |
|---|---|
| **Fraction size** | **CL avg %** |
| 0.125 > 0 mm | 25 |
| 0.315 > 0.125 mm | 20 |
| 0.63 > 0.315 mm | 27 |
| 1.0 > 0.63 mm | 18 |
| 2.0 > 1.0 mm | 9 |
| 3.15 > 2.0 mm | 1 |
| > 3.15 mm | 0 |

**Table 1b**

| **Blend 2** | |
|---|---|
| **Fraction size** | **SL avg %** |
| 0.125 > 0 mm | 35 |
| 0.315 > 0.125 mm | 25 |
| 0.635 > 0.315 mm | 40 |
| 1.0 > 0.63 mm | 0 |
| 2.0 > 1.0 mm | 0 |
| 3.15 > 2.0 mm | 0 |
| > 3.15 mm | 0 |

Fiber Blend 1 was used in fiberboards no. 1 to 3, 5, 6, and 8 to 13, whereas fiber Blend 2 was used in fiberboards no. 4 and 7. The properties of the resulting fiberboards were evaluated by a number of standard methods (Thickness: EN 324-1:1993; Moisture content EN 322:1993; Swelling (%) after 24 hours: EN 317:1993; Elasticity module: EN 310:1993; Bending strength: EN 310: 1993; Internal bond: EN 319:1993; Surface soundness: EN 311:2002). In Table 2, the results are given.

**Table 2 - Properties of tested fiberboards no. 1 to 13 underlined data: outside of target)**

| **Scope of examination** | | | | | | | | |
|---|---|---|---|---|---|---|---|---|
| | **1** | **2** | ***3 (CTRL)*** | **4** | **5** | ***6 (CTRL)*** | **7** | ***Target*** |
| Thickness (mm) | 2.56 | 2.91 | 2.97 | 3.03 | 4.41 | 6.1 | 6.08 | 2 to 6 |
| Moisture content (%) | 5.75 | 6.58 | 6.6 | 6.61 | 8.79 | *6.38* | 6.07 | |
| Swelling after 24 hours (%) | 21.2 | 13.45 | 17.2 | 14.28 | 11.62 | 9.29 | 7.16 | |
| Elasticity module (N/m²) | 2744 | 3838 | ***2100*** | 3176 | 3883 | ***1838*** | 2240 | > 2200 |
| Bending strength (N/m²) | 16.55 | 33.96 | *18.32* | 31.93 | 36.72 | *19.11* | 22.58 | >16 |
| Internal bond (N/m²) | 0.64 | 1.04 | *1.05* | 1.09 | 1.35 | *1.11* | 1.47 | >0.5 |
| Surface soundness (N/m²) | 1.31 | 2.43 | *1.06* | 1.38 | 1.84 | *1.63* | 1.93 | >0.8 |
| Density distribution (average) (kg/m³) | 946 | 982 | ***810*** | 1035 | 1005 | ***883*** | 932 | >930 |

| **Scope of examination** | | | | | | | | |
|---|---|---|---|---|---|---|---|---|
| | **8** | **9** | **10** | **11** | **12** | **13** | ***Target*** | |
| Thickness (mm) | 2.66 | 2.76 | 3.27 | 3.04 | 3.05 | 2.92 | 2 to 6 | |
| Moisture content (%) | ND | ND | ND | ND | ND | ND | | |
| Swelling after 24 hours (%) | ND | ND | ND | ND | ND | ND | | |
| Elasticity module (N/m²) | 2976 | 3877 | 3166 | 2692 | 3645 | 3473 | > 2200 | |
| Bending strength (N/m²) | 31.53 | 38.79 | 29.13 | 22.86 | 30.26 | 28.88 | >16 | |
| Internal bond (N/m²) | 3.27 | 3.62 | 2.35 | 2.62 | 3.2 | 3.59 | >0.5 | |
| Surface soundness (N/m²) | ND | ND | ND | ND | ND | ND | >0.8 | |
| Density distribution (average) (kg/m³) | 1088 | 1115 | 991.9 | 979.6 | 1040 | 1070.8 | >930 | |

As can be seen from **Table 2**, the fiberboards needs to be fairly dense (> 930 kg/m³) in order to have the desired properties. Board 3 (ctrl) and 6 (ctrl), having a density of less than 900 kg/m³, did not reach the target elasticity module. The density of the boards may be controlled by the pressure applied in pressing the boards.

### Example 2 - multi layer boards

In example 2, a number of thin boards with 3 fiber layers (one core layer and two surrounding surface layers) were produced and tested. The core layer comprised fiber Blend 1 (cf. above), whereas the surface layers comprised fiber Blend 2 (cf. above).

### Fibers

The fiber blends were provided in the same manner as in example 1

### Binding agent

The binding agent used was the same as in Example 1, and the blend of binding agent and fibers was obtained in a similar manner as in Example 1.

### Pressing

The fiber mats pressed into 4 fiberboards in **Table 3**, were provided in a similar manner as in example 1, though three layers were arranged on top of each other. The first layer (the core layer) comprised fiber Blend 1, whereas the second and the third layers (the surface layers) comprised fiber Blend 2. The core layer had a percentage (mass basis) of 80% by weight, and each of the surface layers had a percentage (mass basis) of 10% by weight. In order to provide fiberboards with different density, different pressure was applied in pressing the fiber mat.

The properties of the resulting fiberboards were evaluated in the same manner as in example 1.

**Table 3 - Properties of tested fiberboards no. 14-17 underlined data: outside of target)**

| **Scope of examination** | | | | | |
|---|---|---|---|---|---|
| | ***14 (CTRL)*** | ***15 (CTRL)*** | ***16 (CTRL)*** | **17** | ***Target*** |
| Thickness (mm) | *3.57* | *3.17* | *3.49* | 2.82 | 2 to 6 |
| Elasticity module (N/m²) | ***1391*** | ***2186*** | **1414** | 3074 | > 2200 |
| Bending strength (N/m²) | 8.49 | *15* | *7.61* | 26.05 | >16 |
| Internal bond (N/m²) | *0.86* | *1.54* | *0.8* | 2.73 | >0.5 |
| Density distribution (average) (kg/m³) | ***766*** | ***877.8*** | ***747*** | 1036 | >930 |

As can be seen from **Table 3,** also multilayer boards comprising small particles needs to be fairly dense (> 930 kg/m³) in order to have the desired properties. Boards 14 (ctrl) to 16 (ctrl), having a density of less than 900 kg/m³, did not reach the target elasticity module. As can be seen from board 17, the density of the boards may be controlled by controlling the pressure applied in pressing the boards (board 17 comprises approximatively the same amount of fibers as the control boards).

### Example 3 - comparative example

Additional control boards (18 to 20) with a higher proportion of larger fibers (75 wt% of fibers in the size range of 1 to 3 mm, and 25 wt% fibers being smaller than 1 mm), were provided in the same manner as in example 1. Further, the properties of the control boards were evaluated in the same manner as in example 1 and compared to corresponding boards of the invention (i.e. board 11 and 12). In **Table 4,** the results are provided.

**Table 4**

| **Scope of examination** | | | | | |
|---|---|---|---|---|---|
| | ***18 (ctrl)*** | ***19 (ctrl)*** | ***20 (ctrl)*** | **11** | **12** |
| Thickness (mm) | 2.85 | 2.8 | 2.9 | 3.04 | 3.05 |
| Elasticity module (N/m²) | 2679 | 2589 | 2981 | 2692 | 3645 |
| Bending strength (N/m²) | 22.91 | 23.27 | 27.15 | 22.86 | 30.26 |
| Internal bond (N/m²) | 3.07 | 2.96 | 2.81 | 2.62 | 3.2 |
| Density distribution (average) (kg/m³) | 947 | 960 | 1011 | 979.6 | 1040 |

As can be seen from the **Table 4**, the properties of boards 11 and 12 according to the invention are similar to the ones of the control boards 18 to 20. It was thus confirmed that a high proportion of small fibers (< 1 mm) does not result in inferior properties, provided that the board is dense (density > 930 kg/m³). Further, the surface of the fiberboards was smoother compared to the surface of the boards only comprising Blend 1 (i.e. fiberboards no. 1 to 3, 5, 6, 8 to 13).

## Claims

1. A fiberboard comprising lignocellulosic fibers and a binding agent pressed together, wherein:
- the fiberboard is 0.5 to 7 mm thick;
- the content of lignocellulosic fibers in the fiberboard is at least 50 wt%, at 6% moisture content;
- at least 95 wt%, at 6% moisture content, of the lignocellulosic fibers passes through a metal wire cloth sieve width of 3 mm;
- at least 50 wt%, at 6% moisture content, of the lignocellulosic fibers passes through a metal wire cloth sieve width of 630 µm;
- at least 15 wt%, at 6% moisture content, of the lignocellulosic fibers does not pass through a metal wire cloth sieve width of 315 µm; and
- the density of the fiberboard is at least 930 kg/m³.

2. The fiberboard according to claim 1, wherein the fiberboard is 1 to 6 mm thick, preferably 2 to 4 mm thick.

3. The fiberboard according to any one of the claims 1 or 2, wherein the content of lignocellulosic fibers in the fiberboard is at least 70, 80, 85, or 90 wt%, at 6% moisture content.

4. The fiberboard according to any one of the claims 1 to 3, wherein
- at least 20, 25, or 30 wt%, at 6% moisture content, of the lignocellulosic fibers does not pass through a metal wire cloth sieve width of 315 µm; and/or
- at least 5, 10, 15, or 20 wt%, at 6% moisture content, of the lignocellulosic fibers does not pass through a metal wire cloth sieve width of 630 µm; and/or
- at least 95 wt%, at 6% moisture content, of the lignocellulosic fibers passes through a metal wire cloth sieve width of 2 mm; and/or
- at least 50 wt%, at 6% moisture content, of the lignocellulosic fibers passes through a metal wire cloth sieve width of 500 µm; and/or
- at least 97.5 wt%, at 6% moisture content, such as at least 99.0 wt%, at 6% moisture content, of the lignocellulosic fibers passes through a metal wire cloth sieve width of 3 mm, preferably at least 97.5 wt%, at 6% moisture content, such as at least 99.0 wt%, at 6% moisture content, of the lignocellulosic fibers passes through a metal wire cloth sieve width of 2 mm.

5. The fiberboard according to any one of the claims 1 to 4, wherein the fiberboard comprises at least 25 wt% re-cycled lignocellulosic fibers originating from disintegrated MDF- and/or HDF-boards.

6. The fiberboard according to any one of the claims 1 to 5, wherein the binding agent is a resin comprising an isocyanate component, preferably the isocyanate component being methylene diphenyl di-isocyanate (MDI), e.g. 4, 4'-methylene diphenyl di-isocyanate, or polymethylene polyphenylene isocyanate, e.g. a polymethylene polyphenylene isocyanate comprising a residue of 4, 4'-methylene diphenyl di-isocyanate, preferably the amount of binding agent is 1 to 10 wt%, more preferably 2 to 9 wt%, and most preferably 2.5 to 8 wt%, based on final fiberboard weight; or
wherein the binding agent is a urea-formaldehyde resin, or a melamine reinforced urea resin, preferably the amount of binding agent is 5 to 20 wt%, more preferably 6 to 16 wt%, based on final fiberboard weight.

7. The fiberboard according to any of claims 1 to 6, wherein the lignocellulosic fibers and the binding agent are present in at least two connected layers, wherein
- 10 wt% to 50 wt%, at 6% moisture content, of the lignocellulosic fibers in a first layer does not pass through a metal wire cloth sieve width of 630 µm, and at least 50 wt%, at 6% moisture content, of the lignocellulosic fibers in the first layer passes through a metal wire cloth sieve width of 630 µm; and
- more than 90 wt%, at 6% moisture content, of the lignocellulosic fibers in a second layer passes through a metal wire cloth sieve width of 630 µm, and at least 40 wt%, at 6% moisture content, of the lignocellulosic fibers in the second layer passes through a metal wire cloth sieve width of 315 µm;
preferably the second layer has the same as or less weight than the first layer, more preferably the weight of the second layer is less than 50%, most preferably less than 30%, of the weight of the first layer, preferably the first layer is a core layer constituting 30 to 90%, more preferably 40 to 90 %, most preferred 60 to 85% of the total weight of the board.

8. The fiberboard according to any of claims 1 to 7, wherein the lignocellulosic fibers and the binding agent are present in at least three connected layers, wherein:
- 10 to 50 wt%, at 6% moisture content, of the lignocellulosic fibers in a first layer does not pass through a metal wire cloth sieve width of 630 µm, and at least 50 wt%, at 6% moisture content, of the lignocellulosic fibers in the first layer passes through a metal wire cloth sieve width of 630 µm;
- more than 90 wt%, at 6% moisture content, of the lignocellulosic fibers in a second layer passes through a metal wire cloth sieve width of 630 µm, and at least 40 wt%, at 6% moisture content, of the lignocellulosic fibers in the second layer passes through a metal wire cloth sieve width of 315 µm; and
- more than 90 wt%, at 6% moisture content, of the lignocellulosic fibers in a third layer passes through a metal wire cloth sieve width of 630 µm, and at least 40 wt% of the lignocellulosic fibers in the third layer passes through a metal wire cloth sieve width of 315 µm; and
wherein the second and the third layer preferably are arranged at opposite sides of the first layer;
preferably the second and third layers each have the same as or less weight than the first layer, more preferably the weight of each of the second and third layers is less than 50%, most preferably less than 30%, of the weight of the first layer, preferably the first layer is a core layer constituting 30 to 90%, more preferably 40 to 90 %, most preferred 60 to 85% of the total weight of the board.

9. A process for providing a fiberboard comprising lignocellulosic fibers and a binding agent pressed together, the process comprising the steps of:
- mixing lignocellulosic fibers and a binding agent, wherein at least 95 wt%, at 6% moisture content, of the lignocellulosic fibers passes through a metal wire cloth sieve width of 3 mm, at least 50 wt%, at 6% moisture content, of the lignocellulosic fibers passes through a metal wire cloth sieve width of 630 µm, and at least 15 wt%, at 6% moisture content, of the lignocellulosic fibers does not pass through a metal wire cloth sieve width of 315 µm;
- arranging the mix of the lignocellulosic fibers and the binding agent as at least a first layer on a surface; and
- pressing the at least a first layer of mixed lignocellulosic fibers and binding agent to a fiberboard having a total thickness of 0.5 to 7 mm and having a density of at least 930 kg/m³.

10. The process according to claim 9, wherein:
- at least 95 wt%, at 6% moisture content, of the lignocellulosic fibers passes through a metal wire cloth sieve width of 2 mm; and/or
- at least 50 wt%, at 6% moisture content, of the lignocellulosic fibers passes through a metal wire cloth sieve width of 500 µm; and/or
- the moisture content of the lignocellulosic fibers to be arranged and pressed is at least 12% and preferably in the range 14 to 18%; and/or
- at least20, 25, or 30 wt%, at 6% moisture content, of the lignocellulosic fibers does not pass through a metal wire cloth sieve width of 315 µm; and/or
- at least 5, 10, 15, or 20 wt%, at 6% moisture content, of the lignocellulosic fibers does not pass through a metal wire cloth sieve width of 630 µm.

11. The process according to any one of the claims 9 to 10, wherein at least part of the lignocellulosic fibers have been obtained by disintegrating, such as by crushing and/or grinding and/or milling, and/or by refining, a MDF- and/or a HDF-board, particle boards, wood based panels, such as oriented strand board (OSB) and plywood, or solid wood residues, such as parts of solid wood objects or saw dust, preferably the lignocellulosic fibers comprises re-cycled lignocellulosic fibers, preferably at least 25 wt% of the lignocellulosic fibers are recycled lignocellulosic fibers originating from wood related industry, such as forest industry, board industry and furniture industry, and/or post-consumer waste, such as used furniture; most preferably the fiberboard comprises at least 25 wt% re-cycled lignocellulosic fibers originating from disintegrated MDF- and/or HDF-boards.

12. The process for providing a fiberboard according to any one of the claims 9 to 11, the process further comprising the step of size-related sorting, such as classifying, screening, sieving, or sifting, the lignocellulosic fibers before being mixed with the binding agent to control the size distribution of the lignocellulosic fibers, preferably the lignocellulosic fibers have been exposed to a step of disintegration prior to the step of size-related sorting of the fibers.

13. The process for providing a fiberboard according to any one of the claims 9 to 12, wherein a first portion of lignocellulosic fibers is mixed with a second portion of lignocellulosic fibers to provide the lignocellulosic fibers to be mixed with the binding agent, the size distribution of lignocellulosic fibers in the first portion differing from the size distribution of lignocellulosic fibers in the second portion; preferably the first and/or the second portion of lignocellulosic fibers has been obtained by size-related sorting of the lignocellulosic fibers to control the size distribution of the lignocellulosic fibers in the portion.

14. The process for providing a fiberboard according to any one of the claims 9 to 13, the process further comprising the step of forming a second layer of lignocellulosic fibers and a binding agent adjacent to the first layer of mixed lignocellulosic fibers and a binding agent prior to pressing the first layer, whereby a layered fiberboard is provided upon pressing the two layers of lignocellulosic fibers and binding agent, wherein:
- 10 wt% to 50 wt%, at 6% moisture content, of the lignocellulosic fibers in the first layer does not pass through a metal wire cloth sieve width of 630 µm; and
- at least 95 wt%, at 6% moisture content, of the lignocellulosic fibers in the second layer passes through a metal wire cloth sieve width of 3 mm, more than 90 wt%, at 6% moisture content, of the lignocellulosic fibers in the second layer passes through a mesh sieve width of 630 µm, and at least 40 wt%, at 6% moisture content, of the lignocellulosic fibers in free form in the second layer passes through a metal wire cloth sieve width of 315 µm.

15. The process for providing a fiberboard according to any one of the claims 9 to 14, the process further comprising the steps of:
- forming a second layer of lignocellulosic fibers and a binding agent on a first side of the first layer; and
- forming a third layer of lignocellulosic fibers and a binding agent on a second side of the first layer,
the further steps of forming a second and third layer, respectively being performed before pressing the first layer, whereby a layered fiberboard is provided upon pressing the three layers of lignocellulosic fibers and binding agent; wherein
- 10 wt% to 50 wt%, at 6% moisture content, of the lignocellulosic fibers in the first layer does not pass through a metal wire cloth sieve width of 630 µm; and
- at least 95 wt%, at 6% moisture content, of the lignocellulosic fibers in the second layer passes through a metal wire cloth sieve width of 3 mm, more than 90 wt% of the lignocellulosic fibers in the second layer passes through a metal wire cloth sieve width of 630 µm, and at least 40 wt% of the lignocellulosic fibers in free from in the second layer passes through a metal wire cloth sieve width of 315 µm;
- at least 95 wt%, at 6% moisture content, of the lignocellulosic fibers in the third layer passes through a metal wire cloth sieve width of 3 mm, more than 90 wt% of the lignocellulosic fibers in free form in the third layer passes through a mesh sieve width of 630 µm, and at least 40 wt% of the lignocellulosic fibers in free form in the third layer passes through a metal wire cloth sieve width of 315 µm.

16. The process for providing a fiberboard according to any one of the claims 9 to 15, the process further comprising the step of spraying water onto the top surface of the layer(s) of mixed lignocellulosic fibers and binding agent before being pressed into a fiberboard.

## Patentansprüche

1. Faserplatte, die lignozellulosehaltige Fasern und ein Bindemittel umfasst, die miteinander verpresst sind, wobei:
- die Faserplatte 0,5 bis 7 mm dick ist;
- der Gehalt an lignocellulosehaltigen Fasern in der Faserplatte mindestens 50 Gew.-% bei einem Feuchtigkeitsgehalt von 6 % beträgt;
- mindestens 95 Gew.-%, bei 6 % Feuchtigkeitsgehalt, der lignocellulosehaltigen Fasern durch ein Metalldrahtgewebesieb mit einer Weite von 3 mm hindurchgehen;
- mindestens 50 Gew.-%, bei 6 % Feuchtigkeitsgehalt, der lignocellulosehaltigen Fasern durch ein Metalldrahtgewebesieb mit einer Weite von 630 µm hindurchgehen;
- mindestens 15 Gew.-% der lignozellulosehaltigen Fasern bei einem Feuchtigkeitsgehalt von 6 % nicht durch ein Metalldrahtgewebesieb mit einer Weite von 315 µm hindurchgehen; und
- die Dichte der Faserplatte mindestens 930 kg/m³ beträgt.

2. Faserplatte nach Anspruch 1, wobei die Faserplatte eine Dicke von 1 bis 6 mm aufweist, vorzugsweise von 2 bis 4 mm.

3. Faserplatte nach einem der Ansprüche 1 oder 2, wobei der Gehalt an lignozellulosehaltigen Fasern in der Faserplatte mindestens 70, 80, 85 oder 90 Gew.-% bei 6 % Feuchtigkeit beträgt.

4. Faserplatte nach einem der Ansprüche 1 bis 3, wobei
- mindestens 20, 25 oder 30 Gew.-% der lignocellulosehaltigen Fasern bei 6 % Feuchtigkeitsgehalt nicht durch ein Metalldrahtgewebesieb mit einer Weite von 315 µm hindurchgehen; und/oder
- mindestens 5, 10, 15 oder 20 Gew.-% der lignocellulosehaltigen Fasern bei 6 % Feuchtigkeitsgehalt nicht durch ein Metalldrahtgewebesieb mit einer Weite von 630 µm hindurchgehen; und/oder
- mindestens 95 Gew.-%, bei 6 % Feuchtigkeitsgehalt, der lignocellulosehaltigen Fasern durch ein Metalldrahtgewebesieb mit einer Weite von 2 mm hindurchgehen; und/oder
- mindestens 50 Gew.-%, bei 6 % Feuchtigkeitsgehalt, der lignocellulosehaltigen Fasern durch ein Metalldrahtgewebesieb mit einer Weite von 500 pm hindurchgehen; und/oder
- mindestens 97.5 Gew.-%, bei 6 % Feuchtigkeitsgehalt, wie z.B. mindestens 99,0 Gew.-%, bei 6 % Feuchtigkeitsgehalt, der lignocellulosehaltigen Fasern durch ein Metalldrahtgewebesieb mit einer Weite von 3 mm hindurchgehen, vorzugsweise mindestens 97,5 Gew.-%, bei 6 % Feuchtigkeitsgehalt, wie z.B. mindestens 99,0 Gew.-%, bei 6 % Feuchtigkeitsgehalt, der lignocellulosehaltigen Fasern durch ein Metalldrahtgewebesieb mit einer Breite von 2 mm hindurchgehen.

5. Faserplatte nach einem der Ansprüche 1 bis 4, wobei die Faserplatte mindestens 25 Gew.-% wiederverwertete lignozellulosehaltige Fasern umfasst, die aus zerlegten MDF- und/oder HDF-Platten stammen.

6. Faserplatte nach einem der Ansprüche 1 bis 5, wobei das Bindemittel ein Harz ist, das eine Isocyanatkomponente umfasst, wobei die Isocyanatkomponente vorzugsweise Methylendiphenyldiisocyanat (MDI), z. B. 4,4'-Methylendiphenyldiisocyanat, oder Polymethylenpolyphenylenisocyanat, z. B. ein Polymethylenpolyphenylenisocyanat, das einen Rest von 4,4'-Methylendiphenyldiisocyanat enthält, ist, wobei die Menge des Bindemittels vorzugsweise 1 bis 10 Gew.-%, noch bevorzugter 2 bis 9 Gew.-% und am meisten bevorzugt 2.5 bis 8 Gew.-%, ist, bezogen auf das Endgewicht der Faserplatte; oder wobei das Bindemittel ein Harnstoff-Formaldehydharz oder ein melaminverstärktes Harnstoffharz ist, wobei die Menge des Bindemittels vorzugsweise 5 bis 20 Gew.-%, weiter vorzugsweise 6 bis 16 Gew.-%, bezogen auf das Endgewicht der Faserplatte beträgt.

7. Faserplatte nach einem der Ansprüche 1 bis 6, wobei die lignocellulosehaltigen Fasern und das Bindemittel in mindestens zwei miteinander verbundenen Schichten vorliegen, wobei
- 10 bis 50 Gew.-%, bei 6 % Feuchtigkeitsgehalt, der lignocellulosehaltigen Fasern in einer ersten Schicht nicht durch ein Metalldrahtgewebesieb mit einer Weite von 630 µm gehen und mindestens 50 Gew.-%, bei 6 % Feuchtigkeitsgehalt, der lignocellulosehaltigen Fasern in der ersten Schicht durch ein Metalldrahtgewebesieb mit einer Weite von 630 µm gehen; und
- mehr als 90 Gew.-%, bei einem Feuchtigkeitsgehalt von 6 %, der lignocellulosehaltigen Fasern in einer zweiten Schicht durch ein Metalldrahtgewebesieb mit einer Weite von 630 µm hindurchgehen, und mindestens 40 Gew.-%, bei einem Feuchtigkeitsgehalt von 6 %, der lignocellulosehaltigen Fasern in der zweiten Schicht durch ein Metalldrahtgewebesieb mit einer Weite von 315 µm hindurchgehen;
- vorzugsweise die zweite Schicht das gleiche oder ein geringeres Gewicht als die erste Schicht hat, weiter bevorzugt das Gewicht der zweiten Schicht weniger als 50 %, am meisten bevorzugt weniger als 30 % des Gewichts der ersten Schicht beträgt, vorzugsweise die erste Schicht eine Kernschicht ist, die 30 bis 90 %, weiter bevorzugt 40 bis 90 %, am meisten bevorzugt 60 bis 85 % des Gesamtgewichts der Platte ausmacht.

8. Faserplatte nach einem der Ansprüche 1 bis 7, wobei die lignozellulosehaltigen Fasern und das Bindemittel in mindestens drei miteinander verbundenen Schichten vorhanden sind, wobei:
- 10 bis 50 Gew.-%, bei 6 % Feuchtigkeitsgehalt, der lignocellulosehaltigen Fasern in einer ersten Schicht nicht durch ein Metalldrahtgewebesieb mit einer Weite von 630 µm hindurchgehen und mindestens 50 Gew.-%, bei 6 % Feuchtigkeitsgehalt, der lignocellulosehaltigen Fasern in der ersten Schicht durch ein Metalldrahtgewebesieb mit einer Weite von 630 µm hindurchgehen;
- mehr als 90 Gew.-%, bei einem Feuchtigkeitsgehalt von 6 %, der lignocellulosehaltigen Fasern in einer zweiten Schicht durch ein Metalldrahtgewebesieb mit einer Weite von 630 µm hindurchgehen und mindestens 40 Gew.-%, bei einem Feuchtigkeitsgehalt von 6 %, der lignocellulosehaltigen Fasern in der zweiten Schicht durch ein Metalldrahtgewebesieb mit einer Weite von 315 µm hindurchgehen; und
- mehr als 90 Gew.-%, bei einem Feuchtigkeitsgehalt von 6 %, der lignozellulosehaltigen Fasern in einer dritten Schicht durch ein Metalldrahtgewebesieb mit einer Weite von 630 µm hindurchgehen, und mindestens 40 Gew.-% der lignozellulosehaltigen Fasern in der dritten Schicht durch ein Metalldrahtgewebesieb mit einer Weite von 315 µm hindurchgehen; und wobei die zweite und die dritte Schicht vorzugsweise an gegenüberliegenden Seiten der ersten Schicht angeordnet sind;
vorzugsweise haben die zweite und die dritte Schicht jeweils das gleiche oder ein geringeres Gewicht als die erste Schicht, weiter bevorzugt beträgt das Gewicht der zweiten und der dritten Schicht jeweils weniger als 50 %, am meisten bevorzugt weniger als 30 %, des Gewichts der ersten Schicht, vorzugsweise ist die erste Schicht eine Kernschicht, die 30 bis 90 %, weiter bevorzugt 40 bis 90 %, am meisten bevorzugt 60 bis 85 % des Gesamtgewichts der Platte ausmacht.

9. Verfahren zur Herstellung einer Faserplatte, die lignozellulosehaltige Fasern und ein Bindemittel umfasst, die miteinander verpresst werden, wobei das Verfahren die folgenden Schritte umfasst::
- Mischen von lignozellulosehaltigen Fasern und einem Bindemittel, wobei mindestens 95 Gew.-% der lignozellulosehaltigen Fasern bei einem Feuchtigkeitsgehalt von 6 % durch ein Metalldrahtgewebesieb mit einer Weite von 3 mm hindurchgehen, mindestens 50 Gew.-%, bei einem Feuchtigkeitsgehalt von 6 %, der lignozellulosehaltigen Fasern durch ein Metalldrahtgewebesieb mit einer Weite von 630 µm hindurchgehen und mindestens 15 Gew.-% der lignozellulosehaltigen Fasern bei einem Feuchtigkeitsgehalt von 6 % nicht durch ein Metalldrahtgewebesieb mit einer Weite von 315 µm hindurchgehen;
- Anordnen der Mischung aus den lignocellulosehaltigen Fasern und dem Bindemittel als mindestens eine erste Schicht auf einer Oberfläche; und
- Pressen der mindestens einen ersten Schicht aus gemischten lignocellulosehaltigen Fasern und Bindemittel zu einer Faserplatte mit einer Gesamtdicke von 0,5 bis 7 mm und einer Dichte von mindestens 930 kg/m3 .

10. Verfahren nach Anspruch 9, wobei:
- mindestens 95 Gew.-%, bei einem Feuchtigkeitsgehalt von 6 %, der lignocellulosehaltigen Fasern durch ein Metalldrahtgewebesieb mit einer Weite von 2 mm hindurchgehen; und/oder
- mindestens 50 Gew.-%, bei einem Feuchtigkeitsgehalt von 6 %, der lignocellulosehaltigen Fasern durch ein Metalldrahtgewebesieb mit einer Weite von 500 µm hindurchgehen; und/oder
- der Feuchtigkeitsgehalt der anzuordnenden und zu pressenden lignozellulosehaltigen Fasern mindestens 12 % und vorzugsweise im Bereich von 14 bis 18 % beträgt; und/oder
- mindestens 20, 25 oder 30 Gew.-% der lignozellulosehaltigen Fasern bei 6 % Feuchtigkeitsgehalt nicht durch ein Metalldrahtgewebesieb mit einer Weite von 315 µm hindurchgehen; und/oder
- mindestens 5, 10, 15 oder 20 Gew.-% der lignozellulosehaltigen Fasern bei 6 % Feuchtigkeitsgehalt nicht durch ein Metalldrahtgewebesieb mit einer Weite von 630 µm hindurchgehen.

11. Verfahren nach einem der Ansprüche 9 bis 10, wobei zumindest ein Teil der lignozellulosehaltigen Fasern durch Zerkleinern, wie z.B. durch Zerbrechen und/oder Schleifen und/oder Mahlen und/oder durch Verfeinern, einer MDF- und/oder HDF-Platte, Spanplatten, Holzwerkstoffplatten, wie z.B. OSB und Sperrholz, oder von Massivholzresten gewonnen wurde, wie beispielsweise von Teilen von Objekten aus Massivholz oder aus Sägespänen, wobei vorzugsweise die lignocellulosehaltigen Fasern wiederverwertete lignocellulosehaltige Fasern umfassen, vorzugsweise mindestens 25 Gew.-% der lignocellulosehaltigen Fasern wiederverwertete lignocellulosehaltige Fasern sind, die aus der holzverarbeitenden Industrie, wie der Forstindustrie, der Plattenindustrie und der Möbelindustrie, und/oder aus Post-Consumer-Abfällen, wie gebrauchten Möbeln, stammen; und wobei am meisten bevorzugt die Faserplatte mindestens 25 Gew.-% wiederverwerteten lignozellulosehaltige Fasern umfasst, die aus zerlegten MDF- und/oder HDF-Platten stammen.

12. Verfahren zur Herstellung einer Faserplatte nach einem der Ansprüche 9 bis 11, wobei das Verfahren ferner den Schritt des größenbezogenen Sortierens, wie Klassifizieren, Sieben, Screenen oder Sichten, der lignozellulosehaltigen Fasern umfasst, bevor sie mit dem Bindemittel gemischt werden, um die Größenverteilung der lignozellulosehaltigen Fasern zu steuern, wobei die lignozellulosehaltigen Fasern vor dem Schritt des größenbezogenen Sortierens der Fasern vorzugsweise einem Schritt des Zerlegens unterzogen wurden.

13. Verfahren zur Herstellung einer Faserplatte nach einem der Ansprüche 9 bis 12, wobei eine erste Menge lignozellulosehaltiger Fasern mit einer zweiten Menge lignozellulosehaltiger Fasern gemischt wird, um die mit dem Bindemittel zu mischenden lignozellulosehaltigen Fasern bereitzustellen, wobei sich die Größenverteilung der lignozellulosehaltigen Fasern in der ersten Menge von der Größenverteilung der lignozellulosehaltigen Fasern in der zweiten Menge unterscheidet; vorzugsweise die erste und/oder die zweite Menge von lignocellulosehaltigen Fasern durch größenbezogene Sortierung der lignocellulosehaltigen Fasern erhalten wurde, um die Größenverteilung der lignocellulosehaltigen Fasern in der Menge zu steuern.

14. Verfahren zur Herstellung einer Faserplatte nach einem der Ansprüche 9 bis 13, wobei das Verfahren ferner den Schritt der Bildung einer zweiten Schicht aus lignocellulosehaltigen Fasern und einem Bindemittel angrenzend an die erste Schicht aus gemischten lignocellulosehaltigen Fasern und einem Bindemittel vor dem Verpressen der ersten Schicht umfasst, wodurch eine geschichtete Faserplatte durch das Verpressen der beiden Schichten aus lignocellulosehaltigen Fasern und Bindemittel bereitgestellt wird, wobei:
- 10 Gew.-% bis 50 Gew.-%, bei 6 % Feuchtigkeitsgehalt, der lignocellulosehaltigen Fasern in der ersten Schicht nicht durch ein Metalldrahtgewebesieb mit einer Weite von 630 µm hindurchgehen; und
- mindestens 95 Gew.-%, bei 6 % Feuchtigkeitsgehalt, der lignocellulosehaltigen Fasern in der zweiten Schicht durch ein Metalldrahtgewebesieb mit einer Weite von 3 mm hindurchgehen, mehr als 90 Gew.-%, bei 6 % Feuchtigkeitsgehalt, der lignozellulosehaltigen Fasern in der zweiten Schicht durch eine Maschensiebweite von 630 µm hindurchgehen und mindestens 40 Gew.-%, bei 6 % Feuchtigkeitsgehalt, der lignozellulosehaltigen Fasern in freier Form in der zweiten Schicht durch ein Metalldrahtgewebesieb mit einer Weite von 315 µm hindurchgehen.

15. Verfahren zur Herstellung einer Faserplatte nach einem der Ansprüche 9 bis 14, wobei das Verfahren ferner die folgenden Schritte umfasst:
- Bilden einer zweiten Schicht aus lignocellulosehaltigen Fasern und einem Bindemittel auf einer ersten Seite der ersten Schicht; und
- Bilden einer dritten Schicht aus lignozellulosehaltigen Fasern und einem Bindemittel auf einer zweiten Seite der ersten Schicht, wobei die weiteren Schritte des Bildens einer zweiten bzw. dritten Schicht vor dem Verpressen der ersten Schicht durchgeführt werden, wodurch durch das Verpressen der drei Schichten aus lignozellulosehaltigen Fasern und Bindemittel eine geschichtete Faserplatte bereitgestellt wird; wobei
- 10 Gew.-% bis 50 Gew.-%, bei einem Feuchtigkeitsgehalt von 6 %, der lignozellulosehaltigen Fasern in der ersten Schicht nicht durch ein Metalldrahtgewebesieb mit einer Weite von 630 µm gehen; und
- mindestens 95 Gew.-%, bei 6 % Feuchtigkeitsgehalt, der lignocellulosehaltigen Fasern in der zweiten Schicht durch ein Metalldrahtgewebesieb mit einer Weite von 3 mm hindurchgehen, mehr als 90 Gew.-% der lignocellulosehaltigen Fasern in der zweiten Schicht durch ein Metalldrahtgewebesieb mit einer Weite von 630 µm hindurchgehen und mindestens 40 Gew.-% der lignocelluloshaltigen Fasern in der zweiten Schicht in freier Form durch ein Metalldrahtgewebesieb mit einer Weite von 315 µm hindurchgehen;
- mindestens 95 Gew.-%, bei einem Feuchtigkeitsgehalt von 6 %, der lignocellulosehaltigen Fasern in der dritten Schicht durch ein Metalldrahtgewebesieb mit einer Weite von 3 mm hindurchgehen, mehr als 90 Gew.-% der lignocellulosehaltigen Fasern in freier Form in der dritten Schicht durch eine Maschensiebweite von 630 µm hindurchgehen, und mindestens 40 Gew.-% der lignocellulosehaltigen Fasern in freier Form in der dritten Schicht durch ein Metalldrahtgewebesieb mit einer Weite von 315 µm hindurchgehen.

16. Verfahren zur Herstellung einer Faserplatte nach einem der Ansprüche 9 bis 15, wobei das Verfahren ferner den Schritt des Aufsprühens von Wasser auf die obere Oberfläche der Schicht(en) aus gemischten lignocellulosehaltigen Fasern und Bindemittel vor dem Verpressen zu einer Faserplatte umfasst.

## Revendications

1. Panneau de fibres comprenant des fibres lignocellulosiques et un agent liant pressés les uns avec les autres, dans lequel :
- le panneau de fibres a une épaisseur comprise entre 0,5 et 7 mm ;
- la teneur en fibres lignocellulosiques du panneau de fibres est d'au moins 50 % en poids, à une teneur en humidité de 6 % ;
- au moins 95 % en poids, à une teneur en humidité de 6 %, des fibres lignocellulosiques passent à travers une largeur de tamis de toile en fil métallique de 3 mm ;
- au moins 50 % en poids, à une teneur en humidité de 6 %, des fibres lignocellulosiques passent à travers une largeur de tamis de toile en fil métallique de 630 µm ;
- au moins 15 % en poids, à une teneur en humidité de 6 %, des fibres lignocellulosiques ne passent pas à travers une largeur de tamis de toile en fil métallique de 315 µm ; et
- la densité du panneau de fibres est d'au moins 930 kg/m³.

2. Panneau de fibres selon la revendication 1, dans lequel le panneau de fibres a une épaisseur comprise entre 1 et 6 mm, de préférence une épaisseur comprise entre 2 et 4 mm.

3. Panneau de fibres selon l'une ou l'autre des revendications 1 et 2, dans lequel la teneur en fibres lignocellulosiques du panneau de fibres est d'au moins 70, 80, 85, ou 90 % en poids, à une teneur en humidité de 6 %.

4. Panneau de fibres selon l'une quelconque des revendications 1 à 3, dans lequel
- au moins 20, 25, ou 30 % en poids, à une teneur en humidité de 6 %, des fibres lignocellulosiques ne passent pas à travers une largeur de tamis de toile en fil métallique de 315 µm ; et/ou
- au moins 5, 10, 15, ou 20 % en poids, à une teneur en humidité de 6 %, des fibres lignocellulosiques ne passent pas à travers une largeur de tamis de toile en fil métallique de 630 µm ; et/ou
- au moins 95 % en poids, à une teneur en humidité de 6 %, des fibres lignocellulosiques passent à travers une largeur de tamis de toile en fil métallique de 2 mm ; et/ou
- au moins 50 % en poids, à une teneur en humidité de 6 %, des fibres lignocellulosiques passent à travers une largeur de tamis de toile en fil métallique de 500 µm ; et/ou
- au moins 97,5 % en poids, à une teneur en humidité de 6 %, comme au moins 99,0 % en poids, à une teneur en humidité de 6 %, des fibres lignocellulosiques passent à travers une largeur de tamis de toile en fil métallique de 3 mm, de préférence au moins 97,5 % en poids, à une teneur en humidité de 6 %, comme au moins 99,0 % en poids, à une teneur en humidité de 6 %, des fibres lignocellulosiques passent à travers une largeur de tamis de toile en fil métallique de 2 mm.

5. Panneau de fibres selon l'une quelconque des revendications 1 à 4, dans lequel le panneau de fibres comprend au moins 25 % en poids de fibres lignocellulosiques recyclées provenant de panneaux MDF et/ou HDF désagrégés.

6. Panneau de fibres selon l'une quelconque des revendications 1 à 5, dans lequel l'agent liant est une résine comprenant un constituant isocyanate, le constituant isocyanate étant de préférence un méthylène diphényl di-isocyanate (MDI), par exemple un 4,4'-méthylène diphényl di-isocyanate, ou un polyméthylène polyphénylène isocyanate, par exemple un polyméthylène polyphénylène isocyanate comprenant un résidu de 4,4'-méthylène diphényl di-isocyanate, de préférence la quantité d'agent liant est comprise entre 1 et 10 % en poids, on préfère davantage de 2 à 9 % en poids, et l'on préfère le plus de 2,5 à 8 % en poids sur la base d'un poids de panneau de fibres final ; ou
dans lequel l'agent liant est une résine d'urée-formaldéhyde, une résine d'urée renforcée de mélamine, de préférence la quantité d'agent liant est comprise entre 5 et 20 % en poids, on préfère davantage entre 6 et 16 % en poids, sur la base d'un poids de panneau de fibres final.

7. Panneau de fibres selon l'une quelconque des revendications 1 à 6, dans lequel les fibres lignocellulosiques et l'agent liant sont présents dans au moins deux couches liées, dans lequel
- 10 à 50 % en poids, à une teneur en humidité de 6 %, des fibres lignocellulosiques d'une première couche ne passent pas à travers une largeur de tamis de toile en fil métallique de 630 µm, et au moins 50 % en poids, à une teneur en humidité de 6 %, des fibres lignocellulosiques de la première couche passent à travers une largeur de tamis de toile en fil métallique de 630 µm ; et
- plus de 90 % en poids, à une teneur en humidité de 6 %, des fibres lignocellulosiques d'une deuxième couche passent à travers une largeur de tamis de toile en fil métallique de 630 µm, et au moins 40 % en poids, à une teneur en humidité de 6 %, des fibres lignocellulosiques de la deuxième couche passent à travers une largeur de tamis de toile en fil métallique de 315 µm ;
de préférence la deuxième couche a un poids égal ou inférieur à celui de la première couche, on préfère davantage que le poids de la deuxième couche soit inférieur à 50 %, on préfère le plus qu'il soit inférieur à 30 %, du poids de la première couche, la première couche étant une couche d'âme constituant idéalement 30 à 90 %, on préfère davantage 40 à 90 %, on préfère le plus 60 à 85 % du poids total du panneau.

8. Panneau de fibres selon l'une quelconque des revendications 1 à 7, dans lequel les fibres lignocellulosiques et l'agent liant sont présents dans au moins trois couches liées, dans lequel :
- 10 à 50 % en poids, à une teneur en humidité de 6 %, des fibres lignocellulosiques d'une première couche ne passent pas à travers une largeur de tamis de toile en fil métallique de 630 µm, et au moins 50 % en poids, à une teneur en humidité de 6 %, des fibres lignocellulosiques de la première couche passent à travers une largeur de tamis de toile en fil métallique de 630 µm ;
- plus de 90 % en poids, à une teneur en humidité de 6 %, des fibres lignocellulosiques d'une deuxième couche passent à travers une largeur de tamis de toile en fil métallique de 630 µm, et au moins 40 % en poids, à une teneur en humidité de 6 %, des fibres lignocellulosiques de la deuxième couche passent à travers une largeur de tamis de toile en fil métallique de 315 µm ; et
- plus de 90 % en poids, à une teneur en humidité de 6 %, des fibres lignocellulosiques d'une troisième couche passent à travers une largeur de tamis de toile en fil métallique de 630 µm, et au moins 40 % en poids des fibres lignocellulosiques de la troisième couche passent à travers une largeur de tamis de toile en fil métallique de 315 µm ; et
dans lequel les deuxième et troisième couches sont de préférence disposées des côtés opposés de la première couche ;
de préférence, les deuxième et troisième couches ont individuellement un poids égal ou inférieur à celui de la première couche, on préfère davantage que le poids de chacune des deuxième et troisième couches soit inférieur à 50 %, on préfère le plus qu'il soit inférieur à 30 %, du poids de la première couche, la première couche est une couche d'âme constituant idéalement 30 à 90 %, on préfère davantage 40 à 90 %, on préfère le plus 60 à 85 % du poids total du panneau.

9. Procédé d'obtention d'un panneau de fibres comprenant des fibres lignocellulosiques et un agent liant pressés les uns avec les autres, le procédé comprenant les étapes consistant à :
- mélanger des fibres lignocellulosiques et un agent liant, dans lequel au moins 95 % en poids, à une teneur en humidité de 6 %, des fibres lignocellulosiques passent à travers une largeur de tamis de toile en fil métallique de 3 mm, au moins 50 % en poids, à une teneur en humidité de 6 %, des fibres lignocellulosiques passent à travers une largeur de tamis de toile en fil métallique de 630 µm, et au moins 15 % en poids, à une teneur en humidité de 6 %, des fibres lignocellulosiques ne passent pas à travers une largeur de tamis de toile en fil métallique de 315 µm ;
- disposer le mélange des fibres lignocellulosiques et de l'agent liant sous forme d'au moins une première couche sur une surface ; et
- presser l'au moins une première couche de fibres lignocellulosiques et d'agent liant mélangés en un panneau de fibres ayant une épaisseur totale comprise entre 0,5 et 7 mm et ayant une densité d'au moins 930 kg/m³.

10. Procédé selon la revendication 9, dans lequel
- au moins 95 % en poids, à une teneur en humidité de 6 %, des fibres lignocellulosiques passent à travers une largeur de tamis de toile en fil métallique de 2 mm ; et/ou
- au moins 50 % en poids, à une teneur en humidité de 6 %, des fibres lignocellulosiques passent à travers une largeur de tamis de toile en fil métallique de 500 µm ; et/ou
- la teneur en humidité des fibres lignocellulosiques à disposer et à presser est d'au moins 12 %, et s'inscrit de préférence dans la plage de 14 à 18 % ; et/ou
- au moins 20, 25, ou 30 % en poids, à une teneur en humidité de 6 %, des fibres lignocellulosiques ne passent pas à travers une largeur de tamis de toile en fil métallique de 315 µm ; et/ou
- au moins 5, 10, 15, ou 20 % en poids, à une teneur en humidité de 6 %, des fibres lignocellulosiques ne passent pas à travers une largeur de tamis de toile en fil métallique de 630 µm.

11. Procédé selon l'une ou l'autre des revendications 9 et 10, dans lequel au moins une partie des fibres lignocellulosiques a été obtenue par une désagrégation, comme par trituration et/ou fragmentation et/ou broyage, et/ou affinage, d'un panneau MDF et/ou HDF, de panneaux de particules, de panneaux à base de bois, tels qu'un panneau de copeaux orientés (OSB) et un contreplaqué, ou de résidus de bois massif, tels que des parties d'objets en bois massif ou de sciure de bois, de préférence les fibres lignocellulosiques comprennent des fibres lignocellulosiques recyclées, de préférence au moins 25 % en poids des fibres lignocellulosiques sont des fibres lignocellulosiques recyclées provenant de l'industrie du bois, telle que de l'industrie forestière, de l'industrie de fabrication de panneaux et de l'industrie de fabrication de meubles, et/ou de déchets de post-consommation, tels que des meubles usagés ; on préfère le plus que le panneau de fibres comprenne au moins 25 % en poids de fibres lignocellulosiques recyclées provenant de panneaux MDF et/ou HDF désagrégés.

12. Procédé d'obtention d'un panneau de fibres selon l'une quelconque des revendications 9 à 11, le procédé comprenant en outre l'étape consistant à trier par taille, tel que classifier, cribler, tamiser, ou classer, les fibres lignocellulosiques avant leur mélange avec l'agent liant pour commander la distribution de taille des fibres lignocellulosiques, les fibres lignocellulosiques ayant été idéalement exposées à une étape de désagrégation avant l'étape de tri par taille des fibres.

13. Procédé d'obtention d'un panneau de fibres selon l'une quelconque des revendications 9 à 12, dans lequel une première partie de fibres lignocellulosiques est mélangée à une seconde partie de fibres lignocellulosiques pour obtenir les fibres lignocellulosiques à mélanger avec l'agent liant, la distribution de taille de fibres lignocellulosiques de la première partie étant différente de la distribution de taille de fibres lignocellulosiques de la seconde partie ; la première et/ou la seconde partie de fibres lignocellulosiques ayant idéalement été obtenues par un tri par taille des fibres lignocellulosiques pour commander la distribution de taille des fibres lignocellulosiques de la partie.

14. Procédé d'obtention d'un panneau de fibres selon l'une quelconque des revendications 9 à 13, le procédé comprenant en outre l'étape consistant à former une deuxième couche de fibres lignocellulosiques et d'agent liant adjacente à la première couche de fibres lignocellulosiques et d'agent liant mélangés avant de presser la première couche, ce par quoi un panneau de fibres en couches est obtenu lors d'un pressage des deux couches de fibres lignocellulosiques et d'agent liant, dans lequel :
- 10 à 50 % en poids, à une teneur en humidité de 6 %, des fibres lignocellulosiques de la première couche ne passent pas à travers une largeur de tamis de toile en fil métallique de 630 µm ; et
- au moins 95 % en poids, à une teneur en humidité de 6 %, des fibres lignocellulosiques de la deuxième couche passent à travers une largeur de tamis de toile en fil métallique de 3 mm, plus de 90 % en poids, à une teneur en humidité de 6 %, des fibres lignocellulosiques de la deuxième couche passent à travers une largeur de tamis de toile en fil métallique de 630 µm, et au moins 40 % en poids, à une teneur en humidité de 6 %, des fibres lignocellulosiques dans une forme libre de la deuxième couche passent à travers une largeur de tamis de toile en fil métallique de 315 µm.

15. Procédé d'obtention d'un panneau de fibres selon l'une quelconque des revendications 9 à 14, le procédé comprenant en outre les étapes consistant à :
- former une deuxième couche de fibres lignocellulosiques et d'agent liant sur un premier côté de la première couche ; et
- former une troisième couche de fibres lignocellulosiques et d'agent liant sur un second côté de la première couche,
les étapes supplémentaires de formation d'une deuxième et d'une troisième couche, étant respectivement mises en œuvre avant un pressage de la première couche, ce par quoi un panneau de fibres en couches est obtenu lors d'un pressage des trois couches de fibres lignocellulosiques et d'agent liant ; dans lequel
- 10 à 50 % en poids, à une teneur en humidité de 6 %, des fibres lignocellulosiques de la première couche ne passent pas à travers une largeur de tamis de toile en fil métallique de 630 µm ; et
- au moins 95 % en poids, à une teneur en humidité de 6 %, des fibres lignocellulosiques de la deuxième couche passent à travers une largeur de tamis de toile en fil métallique de 3 mm, plus de 90 % en poids des fibres lignocellulosiques de la deuxième couche passent à travers une largeur de tamis de toile en fil métallique de 630 µm, et au moins 40 % en poids des fibres lignocellulosiques dans une forme libre de la deuxième couche passent à travers une largeur de tamis de toile en fil métallique de 315 µm ;
- au moins 95 % en poids, à une teneur en humidité de 6 %, des fibres lignocellulosiques de la troisième couche passent à travers une largeur de tamis de toile en fil métallique de 3 mm, plus de 90 % en poids des fibres lignocellulosiques dans une forme libre de la troisième couche passent à travers une largeur de tamis de toile en fil métallique de 630 µm, et au moins 40 % en poids des fibres lignocellulosiques dans une forme libre de la troisième couche passent à travers une largeur de tamis de toile en fil métallique de 315 µm.

16. Procédé d'obtention d'un panneau de fibres selon l'une quelconque des revendications 9 à 15, le procédé comprenant en outre l'étape consistant à pulvériser de l'eau sur la surface supérieure de la ou des couches de fibres lignocellulosiques et d'agent liant mélangés avant leur pressage en un panneau de fibres.
